# EUROPEAN PATENT APPLICATION

(11) **EP 4 418 800 A1**
(43) Date of publication of application: **21.08.2024**
(21) Application number: 24152277.0
(22) Date of filing: 17.01.2024
(51) Int. Cl.: H04W 74/0833, H04W 74/00

(54) **BEAM OR TIME MANAGEMENT IN RANDOM ACCESS PROCEDURE**

(30) Priority: 17.02.2023 IN 202341010900
(71) Applicant: Nokia Technologies Oy, 02610 Espoo (FI)
(72) Inventor: CAPORAL DEL BARRIO, Samantha, Aalborg (DK); SHETTY, Smita, Bengaluru (IN); TAN, Yi, Cambridge (GB); ONOZAWA, Hisashi, Yokohama (JP)
(74) Representative: Nokia EPO representatives

(57) **Abstract**

There is provided a user equipment apparatus that includes at least one processor and at least one memory storing instructions. The instructions, when executed by the at least one processor, cause the user equipment apparatus at least, for a random access procedure including a random access preamble (MSG1), a random access response (MSG2), and a scheduled transmission (MSG3), to transmit, to a network node apparatus, the MSG1 including a preamble selected among at least two usable preambles. The at least two usable preambles include a first preamble indicating a request for additional time allocation over a time allocation limit, between MSG2 and MSG3.

## Description

### FIELD

Various example embodiments relate generally to wireless networking and, more particularly, to random access procedures in wireless networking.

### BACKGROUND

Wireless networking provides significant advantages for user mobility. A user's ability to remain connected while on the move provides advantages not only for the user, but also provides greater efficiency and productivity for society as a whole. As user expectations for connection reliability, data speed, and device battery life, become more demanding, technology for wireless networking must also keep pace with such expectations. Accordingly, there is continuing interest in improving wireless networking technology.

### SUMMARY

In accordance with aspects of the disclosure, a user equipment apparatus includes at least one processor and at least one memory storing instructions. The instructions, when executed by the at least one processor, cause the user equipment apparatus at least to: for a random access procedure includes a random access preamble (MSG1), a random access response (MSG2), and a scheduled transmission (MSG3): transmit, to a network node apparatus, the MSG1 including a preamble selected among at least two usable preambles. The at least two usable preambles include a first preamble indicating a request for additional time allocation over a time allocation limit, between MSG2 and MSG3.

In an aspect of the present disclosure, information regarding the first preamble for indicating the request for additional time allocation between MSG2 and MSG3 may be provided by a field in system information block 1 (SIB 1).

In an aspect of the present disclosure, the MSG1 may include the first preamble. The instructions, when executed by the at least one processor, may further cause the user equipment apparatus at least to: receive, from the network node apparatus, the MSG2 including information indicating a *k₂* field value associated with a time allocation for transmitting MSG3. The *k₂* field value may correspond to grant of the request for additional time allocation over the time allocation limit.

In an aspect of the present disclosure, the at least two usable preambles may further include a second preamble indicating no request for additional time allocation between MSG2 and MSG3.

In an aspect of the present disclosure, the instructions, when executed by the at least one processor, may further cause the user equipment apparatus at least to: prior to transmitting the MSG1, estimate that power of a beam usable for transmitting the MSG1 will be insufficient for transmitting the MSG3, and determine to use the first preamble for the MSG1.

In an aspect of the present disclosure, the instructions, when executed by the at least one processor, may further cause the user equipment apparatus at least to: receive, from the network node apparatus, the MSG2 indicating a time allocation for transmitting the MSG3, where the time allocation corresponds to grant of the request for additional time allocation over the time allocation limit. In response to receiving the MSG2, the user equipment apparatus may perform a beam refinement procedure within the time allocation indicated in the MSG2 to identify a narrower beam than a beam used to transmit the MSG1, and transmit, to the network node apparatus, the MSG3 using the narrower beam.

In an aspect of the present disclosure, the MSG1 is transmitted using a broad beam.

In accordance with aspects of the disclosure, a method in a user equipment apparatus is presented. The method includes: for a random access procedure including a random access preamble (MSG1), a random access response (MSG2), and a scheduled transmission (MSG3): transmitting, to a network node apparatus, the MSG1 including a preamble selected among at least two usable preambles. The at least two usable preambles include a first preamble indicating a request for additional time allocation over a time allocation limit, between MSG2 and MSG3.

In an aspect of the present disclosure, information regarding the first preamble for indicating the request for additional time allocation between MSG2 and MSG3 may be provided by a field in system information block 1 (SIB 1).

In an aspect of the present disclosure, the MSG1 may include the first preamble. The method may further include receiving, from the network node apparatus, the MSG2 including information indicating a *k₂* field value associated with a time allocation for transmitting MSG3. The *k₂* field value corresponds to grant of the request for additional time allocation over the time allocation limit.

In an aspect of the present disclosure, the at least two usable preambles may further include a second preamble indicating no request for additional time allocation between MSG2 and MSG3.

In an aspect of the present disclosure, the method may further include, prior to transmitting the MSG1, estimating that power of a beam usable for transmitting the MSG1 will be insufficient for transmitting the MSG3, and determining to use the first preamble for the MSG1.

In an aspect of the present disclosure, the method may further include receiving, from the network node apparatus, the MSG2 indicating a time allocation for transmitting the MSG3, where the time allocation corresponds to grant of the request for additional time allocation over the time allocation limit. The method may further include, in response to receiving the MSG2, performing a beam refinement procedure within the time allocation indicated in the MSG2 to idnetify a narrower beam than a beam used to transmit the MSG1, and transmitting, to the network node apparatus, the MSG3 using the narrower beam.

In an aspect of the present disclosure, the MSG1 is transmitted using a broad beam.

In yet another aspect of the present disclosure, a network node apparatus includes: at least one processor and at least one memory. The at least one memory stores instructions which, when executed by the at least one processor, cause the network node apparatus at least to: for a random access procedure including a random access preamble (MSG1), a random access response (MSG2), and a scheduled transmission (MSG3): receive, from a user equipment apparatus, the MSG1 including a preamble selected among at least two usable preambles. The at least two usable preambles include a first preamble indicating a request for additional time allocation over a time allocation limit, between MSG2 and MSG3.

In an aspect of the present disclosure, information regarding the first preamble for indicating the request for additional time allocation between MSG2 and MSG3 may be provided by a field in system information block 1 (SIB1).

In an aspect of the present disclosure, the MSG1 includes the first preamble. The instructions, when executed by the at least one processor, may further cause the network node apparatus at least to transmit, to the user equipment apparatus, the MSG2 including information indicating a *k₂* field associated with a time allocation for transmitting MSG3. The *k₂* field value may correspond to grant of the request for additional time allocation over the time allocation limit.

In an aspect of the present disclosure, the at least two usable preambles may further include a second preamble indicating no request for additional time allocation between MSG2 and MSG3.

In an aspect of the present disclosure, the instructions, when executed by the at least one processor, may further cause the network node apparatus at least to: transmit, to the user equipment apparatus, the MSG2 indicating a time allocation for transmitting the MSG3, where the time allocation corresponds to grant of the request for additional time allocation over the time allocation limit. The MGS2 may be configured to enable the user equipment apparatus to perform a beam refinement procedure within the time allocation indicated in the MSG2 to identify a narrower beam than a beam used by the user equipment apparatus to transmit the MSG1.

In an aspect of the present disclosure, the instructions, when executed by the at least one processor, may further cause the network node apparatus at least to receive, from the user equipment apparatus, the MSG3, where the MSG3 is transmitted by the user equipment apparatus using the narrower beam.

In accordance with aspects of the disclosure, a user equipment apparatus includes at least one processor and at least one memory storing instructions. The instructions, when executed by the at least one processor, cause the user equipment apparatus at least to: for a random access procedure includes a random access preamble (MSG1), a random access response (MSG2), and a scheduled transmission (MSG3): transmit, to a network node apparatus, the MSG1 using a beam; receive, from the network node apparatus, the MSG2 indicating a time allocation for transmitting the MSG3; and in response to receiving the MSG2, perform a beam refinement procedure within the time allocation indicated in the MSG2 to identify a narrower beam than the beam used to transmit MSG1.

According to some aspects, there is provided the subject matter of the independent claims. Some further aspects are defined in the dependent claims.

### BRIEF DESCRIPTION OF THE DRAWINGS

Some example embodiments will now be described with reference to the accompanying drawings.
FIG. 1 is a diagram of an example embodiment of wireless networking between a network node apparatus and a user equipment apparatus, according to one illustrated aspect of the disclosure;
FIG. 2 is a diagram of an example embodiment of a user equipment apparatus sweeping receive beams for SSB bursts, according to one illustrated aspect of the disclosure;
FIG. 3 is a diagram of an example embodiment of a random access procedure, according to one illustrated aspect of the disclosure;
FIG. 4 is a diagram illustrating an example embodiment of a UE apparatus performing a random access procedure using a broad beam, according to one illustrated aspect of the disclosure;
FIG. 5 is a diagram illustrating an example embodiment of beamforming using one element of a four element array, according to one illustrated aspect of the disclosure;
FIG. 6 is a diagram illustrating an example embodiment of beamforming using two elements of a four element array, according to one illustrated aspect of the disclosure;
FIG. 7 is a diagram illustrating an example embodiment of beamforming using four elements of a four element array, according to one illustrated aspect of the disclosure;
FIG. 8 is a diagram illustrating an example embodiment of a UE apparatus performing a random access procedure with beam refinement, according to one illustrated aspect of the disclosure;
FIGS. 9A and 9B illustrate an example embodiment of a flow diagram for a user equipment apparatus operation, according to one illustrated aspect of the disclosure;
FIG. 10 illustrates an example embodiment of a flow diagram for a network node apparatus operation, according to one illustrated aspect of the disclosure; and
FIG. 11 illustrates an example embodiment of components of a user equipment apparatus or of a network node apparatus, according to one illustrated aspect of the disclosure.

### DETAILED DESCRIPTION

In the following description, certain specific details are set forth in order to provide a thorough understanding of disclosed aspects. However, one skilled in the relevant art will recognize that aspects may be practiced without one or more of these specific details or with other methods, components, materials, etc. In other instances, well-known structures associated with transmitters, receivers, or transceivers have not been shown or described in detail to avoid unnecessarily obscuring descriptions of the aspects.

Reference throughout this specification to "one aspect" or "an aspect" means that a particular feature, structure, or characteristic described in connection with the aspect is included in at least one aspect. Thus, the appearances of the phrases "in one aspect" or "in an aspect" in various places throughout this specification are not necessarily all referring to the same aspect. Furthermore, the particular features, structures, or characteristics may be combined in any suitable manner in one or more aspects.

Embodiments described in the present disclosure may be implemented in wireless networking apparatuses, such as, without limitation, apparatuses utilizing Worldwide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic widebandcode division multiple access (W-CDMA), high-speed packet access (HSPA), Long Term Evolution (LTE), LTE-Advanced, enhanced LTE (eLTE), 5G New Radio (5G NR), and 802.11ax (Wi-Fi 6), among other wireless networking systems. The term 'eLTE' here denotes the LTE evolution that connects to a 5G core. LTE is also known as evolved UMTS terrestrial radio access (EUTRA) or as evolved UMTS terrestrial radio access network (EUTRAN).

Aspects of the present disclosure relate to beam and/or time management for random access procedures. Aspects of the present disclosure provide various advantages, including enabling a user equipment apparatus to perform beam refinement between MSG2 and MSG3 of a random access procedure, and enabling a user equipment apparatus to send MSG1 of a random access procedure as quickly as possible whenever a user equipment broad beam can deliver sufficient power.

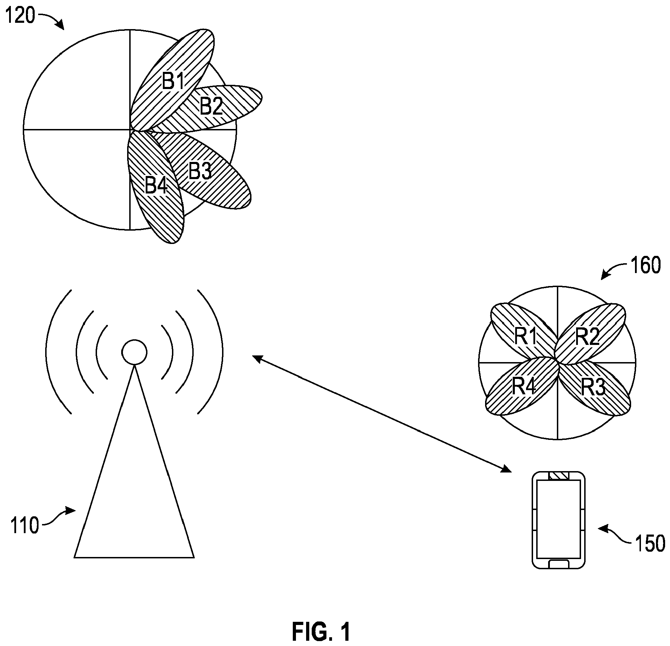

FIG. 1 is a diagram depicting an example of wireless networking between a network node apparatus 110 and a user equipment apparatus 150. The network node apparatus 110 is configured to form beams 120 in multiple directions, and the user equipment apparatus 150 is also configured to form beams 160 in multiple directions. As persons skilled in the art will understand, the capability to beamform in multiple directions may be implemented using arrangements of multiple radiating elements, which may also be referred as "arrays" of radiating elements. Beamforming (also known as spatial filtering) achieves directional signal transmission or reception by utilizing separate arrays and/or by combining elements in an array in such a way that signals at particular angles experience constructive interference while others experience destructive interference. The description below may refer to a "broad beam." Persons skilled in the art will understand and recognize a broad beam for any given array. For example, persons skilled in the art will understand and recognize a broad beam based on half power beam width. In embodiments, a broad beam may be produced by a single radiating element of an array or by multiple radiating elements with specific weights (i.e. phase shifter settings).

Examples of wireless networking apparatuses that apply beamforming in multiple directions include, without limitation, apparatuses implementing 5G NR and apparatuses implementing Wi-Fi 6, among others. The present disclosure describes embodiments related to 5G NR and embodiments which involve aspects defined by 3rd Generation Partnership Project (3GPP). With respect to such embodiments, the network node apparatus 110 may be a gNodeB (also known as gNB). However, it is contemplated that embodiments relating to other wireless networking technologies are encompassed within the scope of the present disclosure.

In radio communications, a node may be implemented, at least partly, by a centralized unit, CU, (e.g., server or host) that is operationally coupled to one or more distributed units, DU, (e.g., a radio head). In embodiments, it is possible that node operations may be distributed among multiple centralized units (e.g., servers or hosts). In embodiments, a network node in 5G wireless networking may be implemented based on a so-called CU-DU split. In embodiments, a processing task may be performed in either the CU or the DU, and the shifting of responsibility between the CU and the DU may be configurable according to a particular implementation.

With continuing reference to FIG. 1, in the example of a 5G NR network, the network node apparatus 110 provides a cell, which defines a coverage area of the network node apparatus 110. As described above, the network node apparatus 110 may be a gNB of the 5G NR network or may be any other apparatus configured to control radio communication and manage radio resources within a cell. As used herein, the term "resource" may refer to radio resources, such as a physical resource block (PRB), a radio frame, a subframe, a time slot, a sub-band, a frequency region, a sub-carrier, a beam, etc. In embodiments, the network node apparatus 110 may be called a base station.

The user equipment apparatus 150 may include, but is not limited to, a smartphone, a tablet, portable computers, vehicle-mounted wireless terminal devices, an Internet of Things (loT) device, and/or a watch or other wearable device, among others. The network node apparatus 110 may provide the user equipment apparatus (UE) 150 with wireless access to other networks, such as the Internet. The wireless access may include downlink (DL) communication from the network node apparatus 110 to the UE 150 and uplink (UL) communication from the UE 150 to the network node apparatus 110. As used herein, the term "transmission" and/or "reception" may refer to, respectively, wirelessly transmitting and/or receiving via a wireless propagation channel on radio resources. There may be other UE in the cell, and each of them may be serviced by the same or by different network node apparatuses, such as network node apparatus 110.

3GPP defines 5G NR frequency ranges, such as Frequency Range 2 (FR2) covering 24.25 GHz to 52.6 GHz, which include high frequencies and include bands having very high bandwidths that can accommodate high data rate use cases. Such bands may be subject to challenging propagating conditions, such as high path loss, absorption from the environment, and penetration losses, among other conditions. To address such conditions, beam management procedures may be used, such as using highly directive beams at the network node apparatus 110 and at the UE 150.

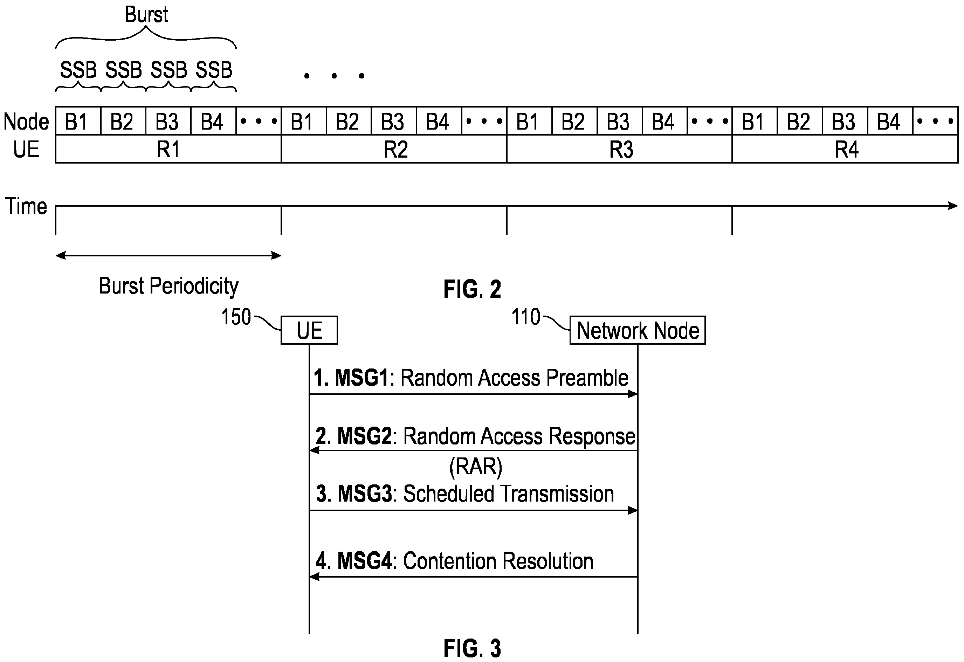

With continuing reference to FIG. 1, various examples of beams 120 are illustrated for the network node apparatus 110 and various examples of beams 160 are illustrated for the UE 150. A consequence of using highly directive beams is that some of the network node apparatus beams 120 may not be usable with some of the UE beams 160 due to large directional differences. Thus, the UE 150 "sweeps" its beams 160 and the network node apparatus 110 "sweeps" its beams 120 to determine which beam-pairing has the highest signal power and, therefore, is best usable for communications. It is possible for beams that are not fully directionally-aligned to have the highest signal power due to various propagating conditions. The sweeps will be described in more detail in connection with FIG. 2. After identifying such a beam pairing, the UE 150 and the network node apparatus 110 may use the identified beams to initiate access procedures for the UE 150 to access the network node apparatus 110.

Referring additionally to FIG. 2, an example of beam sweeping for the example of a 5G NR network is shown. Using the example beams illustrated in FIG. 1, the network node apparatus 110 forms beams B1, B2, B3, and B4, successively. Each formation of the beams is referred to as a "burst." The network node apparatus 110 may generate the bursts at intervals for the UE 150 to observe. Each time between intervals is referred to as "burst period," which may be longer than the duration of a burst. As persons skilled in the art will understand, beamforming for a transmission is implemented by controlling the phase and relative amplitude of the transmission signal at each radiating element in an array, in order to create a desired pattern of constructive and destructive interference in a desired wavefront. Beamforming for a reception, in contrast, is implemented by combining information from different elements of an array in such a way that radiation in a target spatial region is preferentially observed.

In the example of 5G NR, each beam in a burst transmits information about the beam in what is referred to as a Signal Synchronization Block (SSB). A network node apparatus 110, which may be a gNodeB, transmits a SSB in each beam in a burst. In embodiments, the UE 150 may receive a burst for each of its receive beams. In the example of four receive beams R1, R2, R3, and R4, shown in FIG. 1, receiving the bursts takes four intervals, as shown in FIG. 2. The duration between bursts is referred to as "burst periodicity." In a 5G NR network, SSB bursts each last 5ms, and burst periodicity has a default duration of 20ms.

In the example of 5G NR, each SSB includes System Information (SI) in the form of Master Information Blocks (MIB) and a number of System Information Blocks (SIB). The SI is divided into Minimum SI and Other SI. Minimum SI includes basic information usable for accessing the network node and information for acquiring any other SI. Minimum SI includes the MIB, which contains cell barred status information and physical layer information of the cell for receiving further system information (e.g., CORESET#0 configuration). MIB is periodically broadcast on a broadcast channel (BCH). Minimum SI also includes a System Information Block 1 (SIB1), which defines the scheduling of other system information blocks and contains information for accessing the network node. SIB1 may also be referred to as Remaining Minimum SI (RMSI) and is periodically broadcast on a downlink shared channel (DL-SCH).

More specifically, in embodiments, a MIB on a public broadcast channel (PBCH) may provide a UE 150 with parameters (e.g. CORESET#0 configuration) for monitoring a public downlink control channel (PDCCH) for the schedule of a public downlink shared channel (PDSCH) that carries a SIB1. In embodiments, a PBCH may indicate that there is no associated SIB1, in which case the UE 150 may be pointed to another frequency in which to search for an SSB that is associated with a SIB1, and may be pointed to a frequency range where the UE 150 may assume no SSB associated with SIB1 is present. The indicated frequency range may be confined within a contiguous spectrum allocation of the same operator in which SSB is detected.

With continuing reference to FIG. 2, for each transmit-receive beam pair, the UE 150 measures a reference signal received power (RSRP). In embodiments, the beam pair with the maximum RSRP is selected. In embodiments, any beam pair with sufficient RSRP may be selected. Once the beam pair is identified, the UE 150 decodes the SSB of the selected network node transmit beam and decodes its contents, such as a MIB and/or a SIB1. As mentioned above, a MIB contains information of a cell for receiving further system information, and SIB1 defines the scheduling of other system information blocks and contains information for accessing the network node. Such information may be used by the UE 150 to establish a connection with the network node apparatus 110.

The examples of FIGS. 1 and 2 are merely illustrative. In embodiments, the number and direction of network node beams and the number and direction of UE beams may vary and may be different from those illustrated in FIGS. 1 and 2.

After a beam pair is identified, the procedure for a UE 150 to form a connection with the network node apparatus 110 will be referred to as a "random access procedure." The following describes a random access procedure that includes novel beam management and/or time management. For example, and as described in more detail below, embodiments of a random access procedure may allow a UE 150 to perform beam refinement during the random access procedure and/or may allow a UE 150 time to determine whether to perform beam refinement. The example random access procedure described below will use 5G NR as an example. However, it is intended and will be understood that the random access procedure disclosed herein may be applied to other wireless networks, as well.

FIG. 3 shows a signal diagram of an example of a random access procedure between a UE 150 and a network node apparatus 110. In embodiments relating to 5G NR, the random access procedure may be used for initial access, small data transmissions in Inactive and transition from RRC_Inactive to RRC_Connected, as well as in beam failure recovery, connection re-establishment, handover, and cell addition, which persons skilled in the art will understand, among other procedures. In the illustrated example, the signals include a random access preamble (MSG1) transmitted by the UE 150 to the network node apparatus 110, a random access response (MSG2) transmitted from the network node apparatus 110 to the UE 150, and a schedule transmission (MSG3) transmitted from the UE 150 to the network node apparatus 110. An optional contention resolution (MSG4) may be transmitted from the network node apparatus 110 to the UE 150.

For MSG1, the UE 150 selects a usable random access preamble based on information elements in the SSB in the selected network node transmit beam. The random access preamble configurations for use by the UE 150 are provided to the UE 150 in the System Information in the SSB. Multiple random access preamble formats can be defined. The UE 150 sends the random access preamble (MSG1) to the network node apparatus 110 using a specific time and frequency resource known as random access occasion (RO). The UE 150 also provides an identity, called random access radio network temporary identity (RA-RNTI), to the network so that the network can address it in the next step.

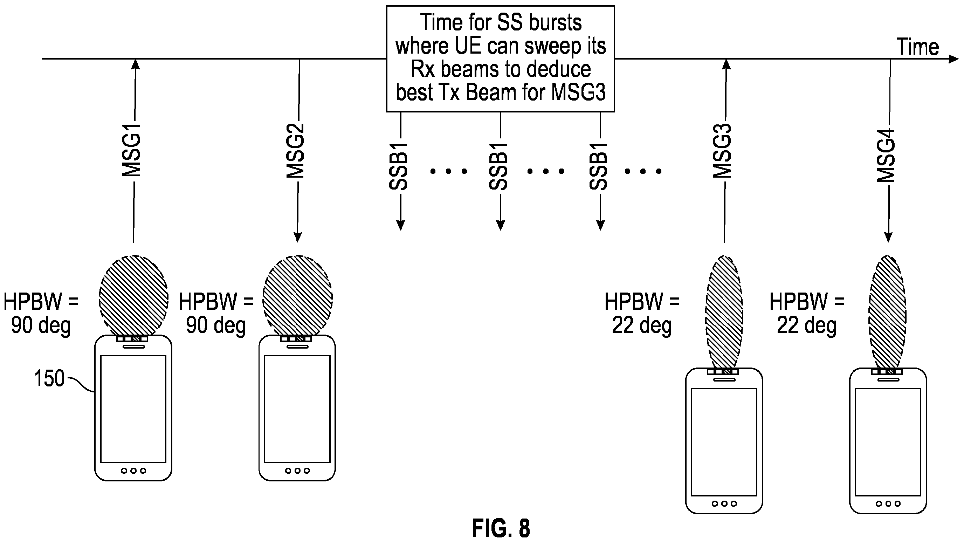

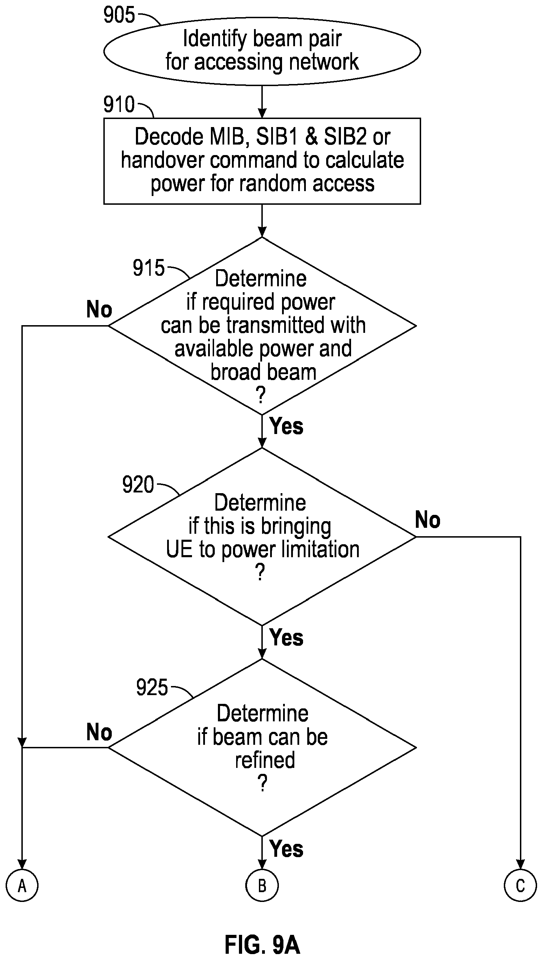

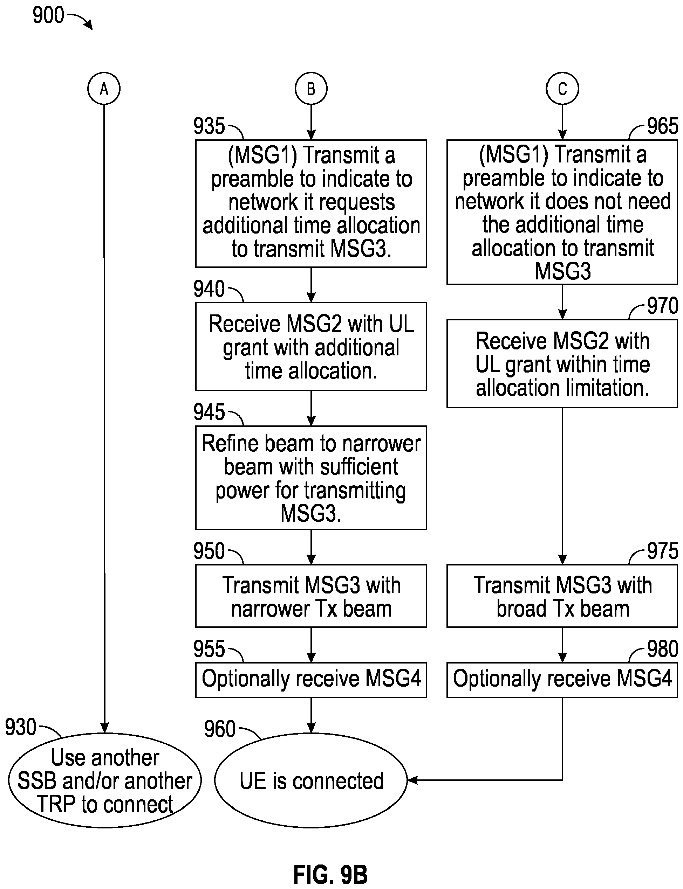

For MSG2, the network node apparatus 110 detects the preamble, calculates various quantities, and sends a physical uplink shared channel (PUSCH) uplink (UL) grant to the UE 150. This is called the random access response (RAR), which is sent as MSG2 addressed to the UE 150 with the relevant RA-RNTI and indicates to the UE 150 where in frequency and when in time it can transmit MSG3 on the PUSCH. In embodiments, as specified by 3GPP for 5G NR in specification TS 38.214 section 6.1.2.1.1, the time allocation in the RAR depends primarily on a *k₂* value and subcarrier spacing (SCS). For example, with reference to slots for a PUSCH transmission scheduled by a RAR UL grant, if a UE 150 receives a RAR message ending in slot *n*, the UE 150 would then be allocated time to transmit the MSG3 in slot *n* + *k*₂ + Δ + 2*^{µ}* · *K*_{cell,offset}. In embodiments, the parameters and their values (e.g., values of *k*₂ and Δ) may be provided by 3GPP specification TS 38.214 section 6.1.2.1.1, and *K*_{cell,offset} is either provided by an information element *CellSpecific_Koffset* or is set to 0. As an example, for frequency range 2 (FR2), assuming subcarrier spacing (SCS) of 120 KHz, and assuming default time domain resource allocation A for normal cyclic prefix (CP) with PUSCH mapping type A, the UE 150 can be scheduled to transmit MSG3 a maximum of 12 slots after the UE 150 receives the RAR message. In case the information element *pusch-TimeDomainAllocationList* is provided in the information element *pusch-ConfigCommon,* then the UE 150 can be scheduled to transmit MSG3 at a maximum of 38 slots after the UE 150 receives the RAR message. Such examples are merely illustrative. Further embodiments relating to the time allocation specified in MSG2 for a UE 150 to transmit MSG3 will be described in more detail in connection with FIGS. 8 and 9.

For MSG3, in response to receiving the MSG2 from the network node apparatus 110, the UE 150 sends MSG3 using the UL grant provided in the RAR. Because the RAR provides a time resource allocation, the UE 150 sends MSG3 to the network node apparatus 110 at a timing specified by the time resource allocation. This MSG3 may be called a radio resource control (RRC) connection request message.

For MSG4, the network node apparatus 110 may send MSG4 to the UE 150 for contention resolution. Contention resolution may operate in the manner specified by 3GPP for 5GNR. After the random access procedure, assuming contention resolution is not needed or is resolved favorably, the UE 150 becomes connected to the network node apparatus 110.

The description above relating to 5G NR is merely an example. Aspects of the random access procedure described above and shown in FIG. 3 may be applied to other wireless networking technologies.

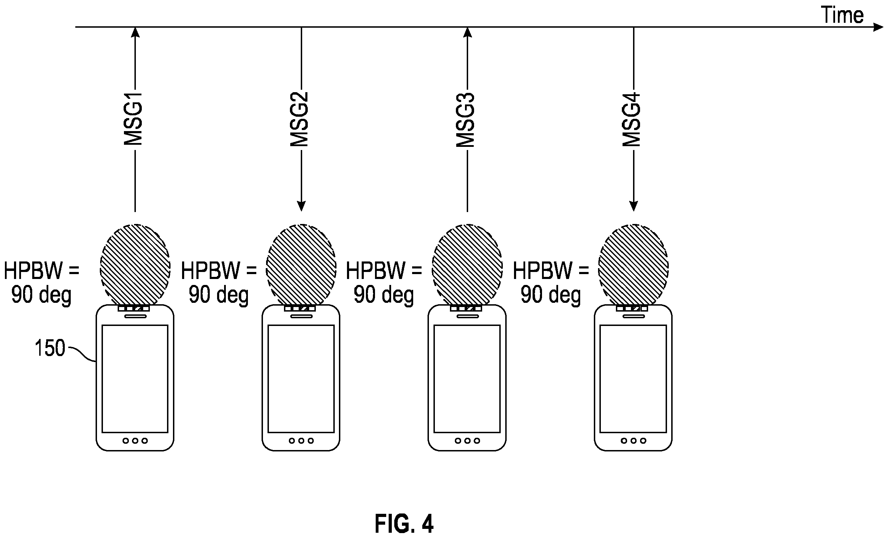

FIG. 4 is a diagram depicting transmissions and receptions by a UE 150 and its receive beam during a random access procedure. Based on the operations described in connection with FIG. 2, the UE 150 selects a beam pairing for communicating with the network node apparatus (e.g., 110, FIG. 1). The UE beam in the beam pairing is a transmit beam for MSG1 and MSG3 and is a receive beam for MSG2 and MSG4. In both transmission and reception, FIG. 4 shows the half power beam width (HPBW) as 90 degrees. The illustrated beam width and coverage is illustrative, and other beam widths and coverage are within the scope of the present disclosure. For example, in embodiments, a narrower beam produced by at least two radiating elements of an array may be used for the random access procedure of FIG. 4, such that a narrower beam is used to transmit both MSG1 and MSG3.

Using a broad beam for the entire random access procedure, as shown in FIG. 4, is possible in situations where the transmit beam has sufficient power to reach the network node apparatus. There may be scenarios where the UE 150 is power limited, such as when at the UE 150 is located near the edge of a cell and/or located a distance away from the network node apparatus. In such scenarios, the UE 150 may have sufficient power to transmit MSG1, which is the random access preamble and is a relatively small amount of data. However, the UE 150 may not have sufficient power to transmit MSG3, which includes a larger amount of data than MSG1. In embodiments, one way the UE 150 can improve its transmission power for transmitting MSG3, to improve its chance of reaching the network node apparatus, is by refining its beam to a narrower beam. In embodiments, a refined beam can be produced by two or more radiating elements of an array (e.g., by 2, 3, ... or N elements of a 1xN array). In embodiments, the refined beam may be steered with specific values of phase shifters (e.g., steered to 90 degrees offset).

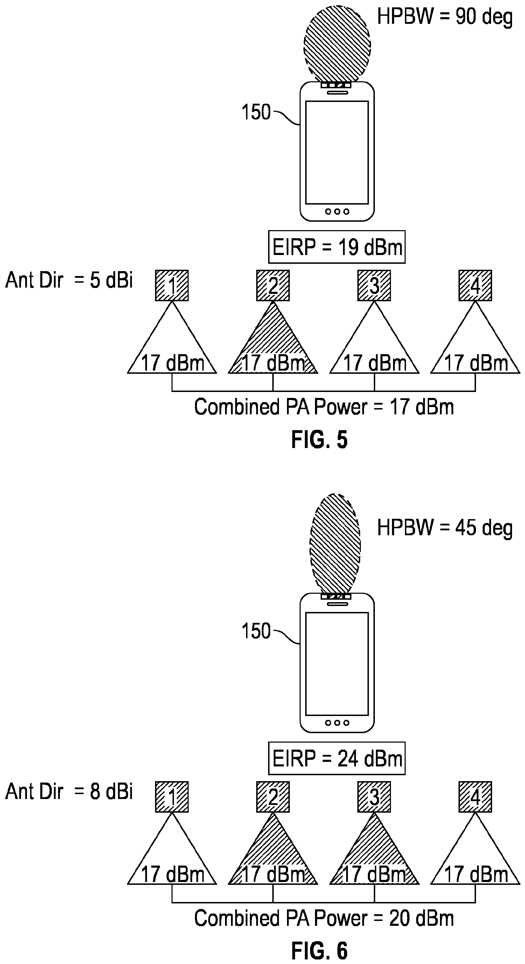

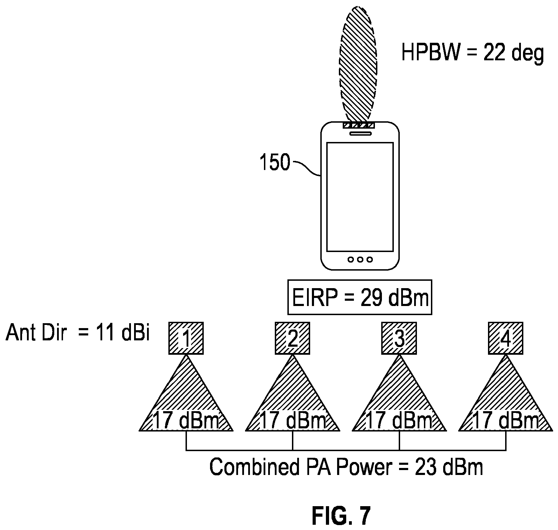

FIGS. 5-7 depict examples of configuring an array of radiating elements in different ways to increase the effective isotropic radiated power (EIRP) of an array. FIGS. 5-7 depict an example of an array of four radiating elements with each element having a 17 dBm power amplifier (PA). The number and arrangement of radiating elements and the power of the PA are merely examples. Activating a single radiating element of the array provides a wide beam, which in the example of FIG. 5 has a HPBW of 90 degrees and EIRP of 19 dBm. To increase EIRP, a second radiating element of the array may be activated, as shown in FIG. 6. The beam of FIG. 6 has a EIRP of 24 dBm and, due to constructive and destructive interference of the signals at various angles, the beam has a HPBW of 45 degrees. FIG. 7 shows an example of activating all four radiating elements to increase EIRP. In the example of FIG. 7, the beam has an EIRP of 29 dBm and has a HPBW of 22 degrees. FIGS. 5-7 also indicate antenna gain (shown as "Ant Dir") stated in dBi (dB relative to an ideal isotropic radiator). An increase in antenna gain is achieved by narrowing the width of the antenna beam, e.g., in the manner described above. Generally, a higher dBi for an antenna topology corresponds to a higher antenna gain and a narrower beam. Thus, the beam will cover farther in a narrower direction. For example, a 22 degree beam at an antenna gain of 11 dbi (e.g., FIG. 7) will be narrower and cover farther than a 90 degree beam at an antenna gain of 5dBi (e.g, FIG. 5).

As shown by the examples of FIGS. 5-7, the power of a UE beam may be increased by configuring an array of radiating elements in various ways. A consequence of doing so, however, is that the UE beam takes different shapes and can possibly have different directions. For example, a beam may have different directions by applying specific values of phase shifters (e.g., steer to 90 degrees offset). Because a UE array may narrow its beam in different ways and have different resulting shapes and/or directions, the random access procedure may include a process for a UE 150 to select one of the narrower beams to use for transmitting MSG3.

In embodiments, before MSG3 in the random access procedure, SSBs may be used by the UE 150 to measure RSRP to refine its beam. Thus, a UE 150 may refine its receive beam by sweeping its narrower beams in a manner similar to that shown and described in connection with FIG. 2, except that receive beams R1, R2, R3, and R4 are replaced by the UE's narrower beams. In embodiments, a UE 150 may not sweep all available narrower beams. In embodiments, a UE 150 may sweep a subset of narrower beams, such as a subset of narrower beams that have a balance of beam coverage and EIRPs. The narrower beam from the sweep that has the highest RSRP, or any narrower beam that has a RSRP above a threshold value, may be selected as the refined beam.

While this beam refinement process uses receive beams rather than transmit beams, the transmit beam to use for MSG3 may be inferred from the selected receive beam. As described above, beamforming for a reception is implemented by combining information from different elements of an array in such a way that radiation in a target spatial region is preferentially observed. Thus, a receive beam may target a spatial region that a transmit beam would occupy, and correspondingly, the transmit beam may be formed to cover the spatial region preferentially observed by the selected receive beam. In embodiments, the sweep may not compute RSRP for every SSB of a burst. In embodiments, because beam pairing occurs before a random access procedure, as described above, the sweep of UE narrower beams may evaluate RSRP for just the network node transmit beam that has been paired and, optionally, for one or more beams adjacent to the network node transmit beam that has been paired.

FIG. 8 shows a depiction of an example random access procedure that includes a UE's sweep of its narrower beams to determine a transmit beam with increased power for transmitting MSG3. In the example of FIG. 8, the UE 150 sweeps its narrower beams after receiving MSG2 and before transmitting MSG3. After identifying the narrower beam to use for transmitting MSG3, the UE 150 may use the identified narrower beam to transmit MSG3 to the network node apparatus (e.g., 110, FIG. 1).

Comparing the random access procedure with beam refinement, as in FIG. 8, with the random access procedure without beam refinement, as in FIG. 4, the procedure of FIG. 8 involves more time between MSG2 and MSG3. As mentioned above, the random access response (RAR), which is sent as MSG2 by the network node apparatus, indicates to the UE 150 where in frequency and when in time the UE 150 can transmit MSG3.

For a network node apparatus to assign additional time resources to a UE 150 for beam refinement between MSG2 and MSG3 of the random access procedure, the network node apparatus needs to be aware that the UE 150 may need such additional time. In accordance with aspects of the present disclosure, such an indication is provided by the UE 150 to the network node apparatus. In embodiments, a UE 150 may provide an indication to the network node apparatus in a random access preamble regarding whether or not additional time is requested for the UE 150 to transmit MSG3. In embodiments, a UE 150 may recognize which preamble(s) to use to request additional time to transmit MSG3 and which preamble(s) to use when not requesting additional time to transmit MSG3, based on information regarding usable random access preambles contained in the SSB of the selected network node transmit beam. In embodiments, the information regarding usable random access preambles for requesting additional time to transmit MSG1 may be implemented by an information element in SIB1. The information element in SIB1 may contain certain preambles a UE 150 can use (e.g., when the UE 150 is power limited and would like to refine its beam) to request additional time to transmit MSG3. In embodiments, for 5G NR, the informational element may be a field in RACH-ConfigGeneric of the SIB1. In embodiments, the field may be called, for example, *prach-Configurationlndex-BR* and may have an integer value. When a UE 150 determines it may need additional time to send MSG3 (e.g., when the UE is power limited and may refine its beam), the UE 150 may select the value broadcast in the *prach-Configurationlndex-BR* field for a random access preamble transmitted as MSG1. The network node apparatus, on receiving such preamble(s) from the UE 150, may then allocate additional time for the UE 150 to transmit MSG3.

In the random access procedure of FIG. 4, and according to standards definitions defined by 3GPP for 5GNR, for subcarrier spacing (SCS) of 120 KHz, the time allocation limit for a PUSCH mapping type A with normal cyclic prefix (CP) can be either 12 slots or 38 slots, with the latter in the case that *pusch-TimeDomainAllocationList* is provided in *pusch-ConfigCommon.* The case of 12 slots may translate to a maximum PUSCH time allocation limit of 1.5 ms for a UE 150 to transmit MSG3 (e.g., µ= 3, each slot=0.125 ms; 12 slots = 12 * .125 = 1.5 ms).

In contrast, in the random access procedure of FIG. 8, when a UE 150 (e.g., a power limited UE 150) refines its beams, it sweeps the narrower beams for the SSB bursts. In embodiments, for a sweep of three narrower beams and a burst periodicity of 20ms, the minimum slots the UE 150 may take for sweeping three narrower beams would be, for example, 20ms per burst/0.125ms per slot * 3 narrower beams = 480 slots. Similarly, in embodiments where the UE sweeps five narrower beams, the slots the UE 150 may take to do so would be 800 slots. In embodiments, in case a UE 150 requests additional time allocation over the time allocation limit of either 12 slots or 38 slots, the value of the PUSCH time domain allocation in the uplink grant of the RAR should be at least 480 slots and can be up to 800 slots.

Referring again to FIG. 1, in the case of 5G NR, the network node apparatus may implement the additional time allocation using new parameter values. As mentioned above, in embodiments, if a UE 150 receives a RAR message ending in slot *n*, the UE 150 would then be allocated time to transmit the MSG3 in slot *n* + *k*₂ + Δ + 2*^{µ}* · *K*_{cell,offset}. In embodiments, a network node apparatus, that implements additional time allocation for a UE 150 to transmit MSG3, may include a value of Δ= 800 for µPUSCH = BR-3 (SCS = 120 KHz), as shown in the following Table 1. In embodiments, BR-3 may itself be a selectable value of µPUSCH. In embodiments, BR-3 may be any value usable for µPUSCH (e.g., an integer value).

**Table 1**

| ***µ_{PUSCH}*** | ***Δ*** |
|---|---|
| 0 | 2 |
| 1 | 3 |
| 2 | 4 |
| 3 | 6 |
| 5 | 24 |
| 6 | 48 |
| **BR-3** | **800** |

The same principle may be extended to other numerologies, e.g., µ = 4 for 240 KHz SCS for FR2-2 (i.e., <52.6 GHz), among other numerologies.

In the case that *pusch-TimeDomainAllocationList* is provided in *pusch-ConfigCommon,* the network node apparatus may implement the additional time allocation using a field, in the *pusch-TimeDomainAllocation* information element, which signals the *k₂* value(s) that can be used for additional time allocation for transmitting MSG3. In embodiments, the field may be called *k2-BR,* for example.

In embodiments, the network node apparatus may implement restrictions to reduce the possibility of UEs inappropriately requesting additional time allocation. Providing additional time allocation via the uplink grant in MSG2 for a UE to transmit MGS3 has a cost, i.e., a delay in the random access procedure compared to that of FIG. 4. However, in cases of UEs which are power limited, the probability of MSG3 actually reaching the wireless node apparatus, after the UE refines its beam, will be greatly increased. To balance these interests, in embodiments, the network node apparatus may implement restrictions that prevent UEs from repeatedly requesting additional time allocation in a short time span. For example, once a UE is assigned additional time allocation to transmit MSG3, in the uplink grant of MSG2, the network node apparatus may restrict the UE from using such preamble(s) again for a certain duration of time.

In embodiments, when the additional time allocation functionality is implemented, UEs which are power limited may request additional time allocation for transmitting MSG3, but the network node apparatus may deny the UE request based on various factors, such as based on network load factors or other network conditions.

Referring now to FIG. 9A and 9B, there is shown a flow diagram of an example of a UE operation for establishing access with a network node apparatus. At block 905, the UE operation involves identifying a beam pair for accessing the network node apparatus. In embodiments, the operation of block 905 may be implemented in the manner described in connection with FIG. 2 and results in identification of a network node transmit beam and a UE receive broad beam that will be used for accessing the network node apparatus. In embodiments, as mentioned above, persons skilled in the art will understand and recognize a broad beam for any given array. For example, persons skilled in the art will understand and recognize a broad beam based on half power beam width. In embodiments, a broad beam may be produced by a single radiating element of an array or by multiple radiating elements with specific weights (i.e. phase shifter settings).

At block 910, the UE operation involves decoding MIB, SIB1, System Information Block 2 (SIB2), and/or handover command in the SSB of the paired network node transmit beam to calculate power needed for a random access procedure. In embodiments, the UE may compute RSRP of the SSB and subtract the RSRP from a known network node transmit power to determine beam power attenuation from the network node apparatus to the UE. Using this beam power attenuation, the UE can determine how much power is required for the UE to compensate for the power attenuation.

At block 915, the UE operation involves determining if the required power can be transmitted by the UE based on the UE's available power. If the determination at block 915 is the UE cannot transmit the required power, the UE operation proceeds to block 930, which proceeds to find another beam pair and/or another SSB associated with a different network node transmission beam. If the determination at block 915 is the UE can transmit the required power, the UE operation proceeds to block 920.

At block 920, the UE operation involves determining if the required power exceeds the power limitation for a broad beam. If the determination at block 920 is the required power does not exceed the power limitation for a broad beam, the UE operation proceeds to blocks 965-980, which perform random access procedure using a broad beam without additional time allocation. Specifically, at block 965, the UE operation involves transmitting a random access preamble that indicates to the network node apparatus that the UE does not need additional time allocation for the UE to transmit MSG3. An example of such preamble was described in connection with FIG. 8. At block 970, the UE operation involves receiving MSG2 with a UL grant within a time allocation limit (e.g., within 12 slots or 38 slots), as described above herein. At block 975, the UL operation involves transmitting MSG3 using a broad transmit beam at the time slot indicated in MSG2. At block 980, the operation involves optionally receiving MSG4, which is assumed to indicate no contention or to resolve any contention favorably, with the broad beam. The UE operation proceeds to block 960, which indicates that the UE is connected to the network node apparatus.

If the determination at block 920 is the required power does exceed the power limitation for a broad beam, the UE operation proceeds to block 925 to determine whether the UE beam can be refined, e.g., in the manner described in connection with FIGS. 5-8. If the determination at block 925 is the UE beam cannot be refined, the UE operation proceeds to block 930, which proceeds to find another beam pair and/or another SSB associated with a different network node transmission beam or with a different transmit-receive point (TRP). If the determination at block 925 is the UE beam can be refined, the UE operation proceeds to block 935.

At block 935, the UE operation involves transmitting a preamble to the network node apparatus to indicate that the UE requests additional time allocation to transmit MSG3. An example of such preamble was described in connection with FIG. 8. At block 940, the UE operation involves receiving MSG2 with a UL grant of additional time allocation over the time allocation limit used in block 970. At block 945, the UE operation involves refining the transmit beam to a narrower beam that has sufficient power for transmitting MSG3. The beam refinement can be performed in the manner described in connection with FIGS. 5-8. At block 950, the UE operation involves transmitting MSG3 with the refined, narrower transmit beam. At block 955, the UE operation involves optionally receiving MSG4, which is assumed to indicate no contention or to resolve any contention favorably, with the narrower transmit beam. The UE operation then proceeds to block 960, which indicates that the UE is connected to the network node apparatus.

In the operations of FIGS. 9A and 9B, the operations of blocks 965-980 involve lower latency than the operations of blocks 935-955. The operations of blocks 935-955 have greater latency because they perform beam refinement procedures. In contrast, the operations of blocks 965-980 do not perform beam refinement and, therefore, have lower latency.

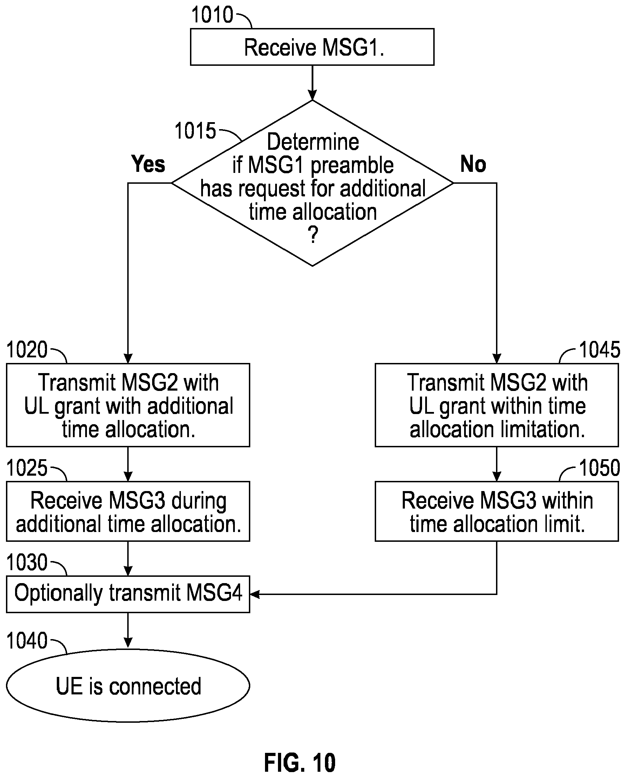

Referring now to FIG. 10, there is shown a flow diagram of an example of a network node operation for establishing access with a UE apparatus. At block 1010, the network node operation involves receiving MSG1 from a UE apparatus. At block 1015, the network node operation involves determining whether MSG1 has a preamble that includes a request for additional time allocation for the UE to transmit MSG3.

If the determination at block 1015 is the preamble includes a request for additional time allocation, the network node operation proceeds to block 1020. At block 1020, the network node operation involves transmitting MSG2 to the UE with an UL grant of additional time allocation for the UE to transmit MSG3. At block 1025, the network node operation involves receiving MSG3 from the UE during the additional time allocation. The network node operation then proceeds to block 1030.

If the determination at block 1015 is the preamble includes a request for additional time allocation, the operation proceeds to block 1045. At block 1045, the network node operation involves transmitting MSG2 to the UE with a UL grant of time allocation within the time allocation limit for the UE to transmit MSG3. At block 1050, the network node operation involves receiving MSG3 from the UE within the time allocation limit. The network node operation then proceeds to block 1030.

At block 1030, the network node operation involves optionally transmitting MSG4 to the UE. Assuming any MSG4 indicates that there is no contention or that any contention is resolved favorably, the network node operation at block 1040 indicates that the UE is connected to the network node apparatus.

The operations of FIGS. 9A, 9B, and 10 are merely examples of operations at a UE and at a network node apparatus, respectively. UE and network node apparatus operations different from those illustrated in FIGS. 9A, 9B, and 10 are contemplated to be within the scope of the present disclosure, such as operations having fewer blocks, more blocks, or different blocks from those shown in FIGS. 9A, 9B, and 10.

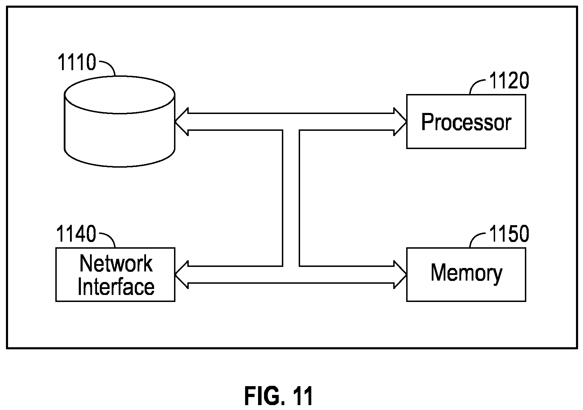

Referring now to FIG. 11, there is shown a block diagram of example components of a user equipment apparatus or a network node apparatus. The apparatus includes an electronic storage 1110, a processor 1120, a memory 1150, and a network interface 1140. The various components may be communicatively coupled with each other. The processor 1120 may be and may include any type of processor, such as a single-core central processing unit (CPU), a multi-core CPU, a microprocessor, a digital signal processor (DSP), a System-on-Chip (SoC), or any other type of processor. The memory 1150 may be a volatile type of memory, e.g., RAM, or a non-volatile type of memory, e.g., NAND flash memory. The memory 1150 includes computer-readable instructions that are executable by the processor 1120 to cause the apparatus to perform various operations, including the beam-pairing and random access procedures mentioned above.

The electronic storage 1110 may be and include any type of electronic storage used for storing data, such as hard disk drive, solid state drive, and/or optical disc, among other types of electronic storage. The electronic storage 1110 stores software instructions for causing the apparatus to perform its operations and stores data associated with such operations, such as storing data relating to 5G NR standards, among other data. The network interface 1140 may implement wireless networking technologies such as 5G NR, Wi-Fi 6, and/or other wireless networking technologies, and may include one or more arrays of radiating elements, such as those described in connection with FIGS. 1 and 5-6.

The components shown in FIG. 11 are merely examples, and persons skilled in the art will understand that an apparatus includes other components not illustrated and may include multiples of any of the illustrated components. Such and other embodiments are contemplated to be within the scope of the present disclosure.

Aspects of the present disclosure provide various advantages, including enabling a UE to perform beam refinement between MSG2 and MSG3 of a random access procedure, and enabling a UE to send MSG1 of a random access procedure as quickly as possible whenever a UE broad beam can deliver sufficient power.

Aspects of the present disclosure may be used in many use cases for 5G NR.

In embodiments, random access preambles of the present disclosure are usable for many applications in beam management, such as, for transmission configuration indication (TCI) switch, beam failure recovery, UE-initiated beam switch, and/or timing, among others. Many of such applications relate to FeMIMO and it is beneficial to not delay the UE sending MSG1 (random access preamble) to the network as part of the random access procedure.

In embodiments, aspects of the present disclosure are usable to inform a network node that a UE may refine its beam during a random access procedure, as a network node may have no other knowledge of a UE performing beam gain procedures.

In embodiments, aspects of the present disclosure are usable for sending a random access preamble early, which may be useful for a network, e.g., in cases where a random access procedure is used for positioning, and avoids unnecessarily delaying MSG1 of a random access procedure.

In embodiments, for coverage enhancements applications, aspects of the present disclosure may be an alternative that consumes less resources on a network side and less UE power, while total latency is unchanged.

In embodiments, for beam correspondence, aspects of the present disclosure are useful by enabling a UE to choose to refine or not to refine its beam for random access procedure and indicating this to the network node with the choice of preamble.

Aspects of the present disclosure are applicable to enabling a power limited UE to refine its beam primarily for MSG3 payload (i.e., when the UE determines that it can transmit MSG3 only by refining its beams with DL Path loss estimation, among other factors).

Considering a use case where a power limited UE performs random access procedure due to Small Data Transmissions in INACTIVE or there is data in its buffer so it needs to transition to RRC_CONNECTED or is paged by the network, a problem may arise. Specifically, a UE spends resources/power for aligning before transmitting MSG1 only to find out in MSG2 that it cannot have sufficient UL resources. This problem is addressed by advantages of aspects of the present disclosure, where the UE first gets the UL grant and then spends resources to refine the beam.

The approach of the present disclosure provides advantages over refining an UE beam prior to transmitting MSG1. Specifically, suppose a UE determines that it is power limited and refines its beams by sweeping narrower beams 3 times for SSB, which translates to around 480 slots. After refining its beams, the UE then transmits MSG1 (random access preamble) to the network node apparatus. There could be a scenario where the network does not assign resources to the UE due to load and it sends a MSG2 (random access response) with a backoff indicator. In this scenario, the UE now cannot access the cell for x amount of time. The only other option it now has is to try accessing another cell if possible or wait for x amount of time before retrying random access procedure in the same cell. This scenario presents a waste of energy, which is further compounded by the fact that the UE is power limited and may not have sufficient power to transmit MSG1 again in the next try.

The approaches described in the present disclosure avoid such a scenario. Aspects of the present disclosure provide the UE with better accessibility to a cell and to resource allocation. The UE will first know early on via MSG2 if it has time resources to further refine its beams for MSG3 or if it needs to attempt random access some time later (e.g., in case RAR with backoff indicator is received). Thus, it is more energy efficient to be assigned resources by the network before beam refinement given that the UE is already power limited, than to refine beams prior to sending MSG1 and receiving a back off indicator in RAR (e.g., in case the network cannot assign resources at that point in time.

Further embodiments of the present disclosure include the following examples.

Example 1. A user equipment apparatus comprising:
for a random access procedure comprising a random access preamble (MSG1), a random access response (MSG2), and a scheduled transmission (MSG3): means for transmitting, to a network node apparatus, the MSG1 comprising a preamble selected among at least two usable preambles, the at least two usable preambles comprising a first preamble indicating a request for additional time allocation over a time allocation limit, between MSG2 and MSG3.

Example 2. The user equipment apparatus of Example 1, wherein information regarding the first preamble for indicating the request for additional time allocation between MSG2 and MSG3 is provided by a field in system information block 1 (SIB1).

Example 3. The user equipment apparatus of any preceding Example,
wherein the MSG1 comprises the first preamble,
the user equipment apparatus further comprising: means for receiving, from the network node apparatus, the MSG2 comprising information indicating a *k₂* field value associated with a time allocation for transmitting MSG3, wherein the *k₂* field value corresponds to grant of the request for additional time allocation over the time allocation limit.

Example 4. The user equipment apparatus of any preceding Example, wherein the at least two usable preambles further comprise a second preamble indicating no request for additional time allocation between MSG2 and MSG3.

Example 5. The user equipment apparatus of any preceding Example, further comprising:
means for, prior to transmitting the MSG1, estimating that power of a beam usable for transmitting the MSG1 will be insufficient for transmitting the MSG3; and
means for determining to use the first preamble for the MSG1.

Example 6. The user equipment apparatus of any of the preceding Example, further comprising:
means for receiving, from the network node apparatus, the MSG2 indicating a time allocation for transmitting the MSG3, the time allocation corresponding to grant of the request for additional time allocation over the time allocation limit;
means for, in response to receiving the MSG2, performing a beam refinement procedure within the time allocation indicated in the MSG2 to identify a narrower beam than a beam used to transmit the MSG1; and
means for transmitting, to the network node apparatus, the MSG3 using the narrower beam.

Example 7. The user equipment apparatus of any of the preceding Examples, wherein the MSG1 is transmitted using a broad beam.

Example 8. A network node apparatus comprising:
for a random access procedure comprising a random access preamble (MSG1), a random access response (MSG2), and a scheduled transmission (MSG3): means for receiving, from a user equipment apparatus, the MSG1 comprising a preamble selected among at least two usable preambles, the at least two usable preambles comprising a first preamble indicating a request for additional time allocation over a time allocation limit, between MSG2 and MSG3.

Example 9. The network node apparatus of claim 8, wherein information regarding the first preamble for indicating the request for additional time allocation between MSG2 and MSG3 is provided by a field in system information block 1 (SIB1).

Example 10. The network node apparatus of any of Examples 8 and 9,
wherein the MSG1 comprises the first preamble,
the network node apparatus further comprising: means for transmitting, to the user equipment apparatus, the MSG2 comprising information indicating a *k₂* field value associated with a time allocation for transmitting MSG3, wherein the *k₂* field value corresponds to grant of the request for additional time allocation over the time allocation limit.

Example 11. The network node apparatus of any of Examples 8-10, wherein the at least two usable preambles further comprise a second preamble indicating no request for additional time allocation between MSG2 and MSG3.

Example 12. The network node apparatus of any of Examples 8-11, further comprising: means for transmitting, to the user equipment apparatus, the MSG2 indicating a time allocation for transmitting the MSG3, the time allocation corresponding to grant of the request for additional time allocation over the time allocation limit,
wherein MGS2 is configured to enable the user equipment apparatus to perform a beam refinement procedure within the time allocation indicated in the MSG2 to identify a narrower beam than a beam used by the user equipment apparatus to transmit the MSG1.

Example 13. The network node apparatus of claim 12, further comprising: means for receiving, from the user equipment apparatus, the MSG3, the MSG3 transmitted by the user equipment apparatus using the narrower beam.

The embodiments and aspects disclosed herein are examples of the disclosure and may be embodied in various forms. For instance, although certain embodiments herein are described as separate embodiments, each of the embodiments herein may be combined with one or more of the other embodiments herein. Specific structural and functional details disclosed herein are not to be interpreted as limiting, but as a basis for the claims and as a representative basis for teaching one skilled in the art to variously employ the present disclosure in virtually any appropriately detailed structure. Like reference numerals may refer to similar or identical elements throughout the description of the figures.

The phrases "in an aspect," "in aspects," "in various aspects," "in some aspects," or "in other aspects" may each refer to one or more of the same or different aspects in accordance with this disclosure. The phrase "a plurality of" may refer to two or more.

The phrases "in an embodiment," "in embodiments," "in various embodiments," "in some embodiments," or "in other embodiments" may each refer to one or more of the same or different embodiments in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

Any of the herein described methods, programs, algorithms or codes may be converted to, or expressed in, a programming language or computer program. The terms "programming language" and "computer program," as used herein, each include any language used to specify instructions to a computer, and include (but is not limited to) the following languages and their derivatives: Assembler, Basic, Batch files, BCPL, C, C+, C++, Delphi, Fortran, Java, JavaScript, machine code, operating system command languages, Pascal, Perl, PL1, Python, scripting languages, Visual Basic, metalanguages which themselves specify programs, and all first, second, third, fourth, fifth, or further generation computer languages. Also included are database and other data schemas, and any other meta-languages. No distinction is made between languages which are interpreted, compiled, or use both compiled and interpreted approaches. No distinction is made between compiled and source versions of a program. Thus, reference to a program, where the programming language could exist in more than one state (such as source, compiled, object, or linked) is a reference to any and all such states. Reference to a program may encompass the actual instructions and/or the intent of those instructions.

While aspects of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular aspects. Those skilled in the art will envision other modifications within the scope and spirit of the claims appended hereto.

## Claims

1. A user equipment apparatus comprising means for:
for a random access procedure comprising a random access preamble, MSG1, a random access response, MSG2, and a scheduled transmission, MSG3:
transmitting, to a network node apparatus, the MSG1 comprising a preamble selected among at least two usable preambles, the at least two usable preambles comprising a first preamble indicating a request for additional time allocation over a time allocation limit, between MSG2 and MSG3.

2. The user equipment apparatus of claim 1, wherein information regarding the first preamble for indicating the request for additional time allocation between MSG2 and MSG3 is provided by a field in system information block 1, SIB1.

3. The user equipment apparatus of any preceding claim, comprising means for:
wherein the MSG1 comprises the first preamble,
receiving, from the network node apparatus, the MSG2 comprising information indicating a *k₂* field value associated with a time allocation for transmitting MSG3, wherein the *k₂* field value corresponds to grant of the request for additional time allocation over the time allocation limit.

4. The user equipment apparatus of any preceding claim, wherein the at least two usable preambles further comprise a second preamble indicating no request for additional time allocation between MSG2 and MSG3.

5. The user equipment apparatus of any preceding claim, comprising means for:
prior to transmitting the MSG1, estimate that power of a beam usable for transmitting the MSG1 will be insufficient for transmitting the MSG3,
determining to use the first preamble for the MSG1.

6. The user equipment apparatus of any of the preceding claims, comprising means for:
receiving, from the network node apparatus, the MSG2 indicating a time allocation for transmitting the MSG3, the time allocation corresponding to grant of the request for additional time allocation over the time allocation limit;
in response to receiving the MSG2, performing a beam refinement procedure within the time allocation indicated in the MSG2 to identify a narrower beam than a beam used to transmit the MSG1; and
transmitting, to the network node apparatus, the MSG3 using the narrower beam.

7. The user equipment apparatus of any of the preceding claims, wherein the MSG1 is transmitted using a broad beam.

8. A method for a user equipment apparatus, the method comprising:
for a random access procedure comprising a random access preamble, MSG1, a random access response, MSG2, and a scheduled transmission, MSG3:
transmitting, to a network node apparatus, the MSG1 comprising a preamble selected among at least two usable preambles, the at least two usable preambles comprising a first preamble indicating a request for additional time allocation over a time allocation limit, between MSG2 and MSG3.

9. The method of claim 8, wherein information regarding the first preamble for indicating the request for additional time allocation between MSG2 and MSG3 is provided by a field in system information block 1, SIB1.

10. The method of claims 8 or 9,
wherein the MSG1 comprises the first preamble,
the method further comprising:
receiving, from the network node apparatus, the MSG2 comprising information indicating a *k₂* field value associated with a time allocation for transmitting MSG3, wherein the *k₂* field value corresponds to grant of the request for additional time allocation over the time allocation limit.

11. The method of any one of claims 8-10, wherein the at least two usable preambles further comprise a second preamble indicating no request for additional time allocation between MSG2 and MSG3.

12. The method of any one of claims 8-11, further comprising:
prior to transmitting the MSG1, estimating that power of a beam usable for transmitting the MSG1 will be insufficient for transmitting the MSG3,
determining to use the first preamble for the MSG1.

13. The method of any one of claims 8-12, further comprising:
receiving, from the network node apparatus, the MSG2 indicating a time allocation for transmitting the MSG3, the time allocation corresponding to grant of the request for additional time allocation over the time allocation limit;
in response to receiving the MSG2, performing a beam refinement procedure within the time allocation indicated in the MSG2 to identify a narrower beam than a beam used to transmit the MSG1,
transmitting, to the network node apparatus, the MSG3 using the narrower beam.

14. The method of claim 13, wherein the MSG1 is transmitted using a broad beam.

15. A network node apparatus comprising:
at least one processor; and
at least one memory storing instructions which, when executed by the at least one processor, cause the network node apparatus at least to:
for a random access procedure comprising a random access preamble, MSG1, a random access response, MSG2, and a scheduled transmission, MSG3:
receive, from a user equipment apparatus, the MSG1 comprising a preamble selected among at least two usable preambles, the at least two usable preambles comprising a first preamble indicating a request for additional time allocation over a time allocation limit, between MSG2 and MSG3.
